# EUROPEAN PATENT SPECIFICATION

(11) **EP 0 492 605 B1**
(45) Date of publication and mention of the grant of the patent: **13.03.1996**
(21) Application number: 91122181.0
(22) Date of filing: 23.12.1991
(51) Int. Cl.: F16C 33/04

(54) **Shaft sleeve made of ceramics**
Wellenbuchse aus Keramik
Bague d'arbre en céramique

(30) Priority: 27.12.1990 JP 402363/90 U
(43) Date of publication of application: 01.07.1992
(73) Proprietor: EBARA CORPORATION, Ohta-ku Tokyo (JP)
(72) Inventor: Kajiwara, Ken-ichi, c/o Ebara Corporation, Tokyo (JP)
(74) Representative: Wagner, Karl H.

(56) References cited:
- EP-A- 0 204 235
- DE-A- 1 525 200
- DE-U- 8 910 720
- PATENT ABSTRACTS OF JAPAN vol. 10, no. 301 (M-525)(2357), 14 October 1986; & JP - A - 61112820 (HITACHI LTD) 30.05.1986

## Description

The present invention relates to a shaft sleeve made of ceramics, and more particularly to a shaft sleeve made of ceramics which is provided in confrontation with a stationary sliding member in a sliding bearing or a plain bearing and preferably used for a submerged bearing in a pump for handling liquid containing hard solid material.

Conventionally, a shaft sleeve made of ceramics is applicable to various usages because of its excellency in wear proof or wear resistance.

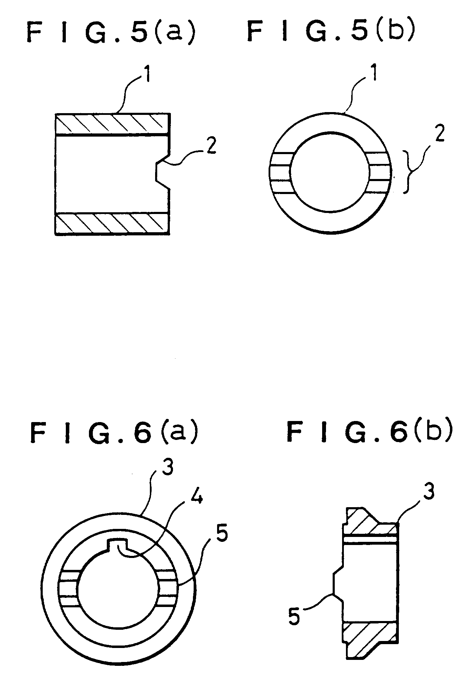

FIGS. 5(a) and 5(b) are a cross-sectional view and a side view, respectively, showing one of conventional shaft sleeves. In FIGS. 5(a) and 5(b), a shaft sleeve 1 is of a cylindrical shape having an inside diameter and an outside diameter formed concentrically. A shaft (not shown) is fitted with the inside diameter of the shaft sleeve 1. Groove-like notches 2 are formed on a right side end of the shaft sleeve 1.

FIGS. 6(a) and 6(b) are a front view and a cross-sectional view, respectively, showing an engaging member 3 for preventing the shaft sleeve 1 from rotating relative to the shaft. The engaging member 3 is formed, on the inside surface thereof, with a key way 4 with which a key (not shown) attached to the shaft is fitted, so that the engaging member 3 is fixed to the shaft and rotated integrally with the shaft. The engaging member 3 is formed, on the left side end thereof, with projections 5 which are fitted with the notches 2 of the shaft sleeve 1, whereby the shaft sleeve 1 of FIG. 5 is prevented from rotating relative to the engaging member 3 and rotated integrally with the shaft.

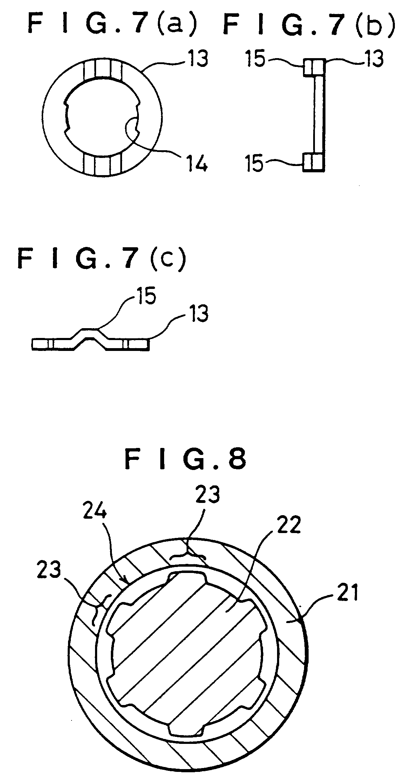

FIGS 7(a), 7(b) and 7(c) are a front view, a side view and an upper plan view, respectively, showing another type of engaging member 13 which is used in conjunction with the shaft sleeve 1 (see FIG. 5) fitted with a spline shaft. In FIG. 7, the engaging member 13 is formed of sheet metal such as a steel plate and has at the inside surface thereof projections 14 which are fitted with a spline groove of the shaft (not shown). Further, the engaging member 13 is provided at the left side end with projections 15 which are fitted with the notches 2 of the shaft sleeve 1, thereby preventing the shaft sleeve 1 from rotating relative to the shaft.

As mentioned above, the shaft sleeve 1 is prevented from rotating relative to the shaft and rotated together with the shaft by the use of the engaging member 3 (see FIG. 6) or the engaging member 13 (see FIG. 7). That is, in order to prevent the shaft sleeve from rotating relative to the shaft, the engaging member comprising a different member from the shaft sleeve is required, and the side end of the shaft sleeve must be machined in the form of groove to engage with the engaging member. However, in the case where the shaft sleeve 1 is made of ceramics, ceramics are brittle and weak in tensile stress, although they are hard. Further, when the shaft sleeve made of ceramics is in operation, stress concentration occurs at the groove-shaped notches 2, and the shaft sleeve is easy to be damaged or broken down. Further in case of the spline shaft, as shown in FIG. 8, the shaft sleeve 21 is in contact with the spline shaft 22 at the contacting portions 23 corresponding to the projecting portions of the spline shaft 22, therefore, the central portions 24 between the adjacent contacting portions 23 are subjected to bending stress. As a result, the shaft sleeve 5 may be damaged or broken.

On the other hand, conventionally, there is a widely used pump which handles liquid having a temperature of 0 to 120°C. In this case, between the shaft sleeve and the shaft, the clearance of about 2/1000 mm with respect to the outside diameter 10 of the shaft is required due to the difference of thermal expansion coefficient between the shaft sleeve made of ceramics and the shaft made of metal such as stainless steel. For example, in case of the shaft having the outside diameter of 30 mm, the clearance of 6/100 mm is required. In this case, 15 taking into consideration dimension tolerance besides the above clearance, the clearance of approximately 0.1 mm is required, thus enlarging or enhancing looseness between two members at a low temperature.

Further, when the spline shaft or polygonal shaft or the 20 like is employed, the contacting area of the shaft and the shaft sleeve is small, resulting in causing the shaft sleeve to be easily cracked.

EP-A-0 204 235 shows a ceramic slide bearing for pump shaft bearings. This slide bearing comprises a shaft sleeve rotating together with the pump shaft and which runs within a bearing sleeve made of the same material, wherein the bearing sleeve is resiliently mounted within a housing.

### SUMMARY OF THE INVENTION

The shaft sleeve made of ceramics has an excellent wear proof (resistance), but is weak in tensile strength and easy to be cracked and has a different thermal expansion coefficient from metal which is used in a general shaft. Therefore, the shaft sleeve made of ceramics has only a limited usage.

It is therefore an object of the present invention to provide a shaft sleeve made of ceramics which is usable under the condition of high temperature and applicable to liquid containing much slurry as a shaft sleeve for a pump, and which is free from thermal spraying process or fitting process with parent (base) metal that would otherwise be necessary to produce.

In order to achieve the above object, in accordance with the present invention, there is provided a shaft sleeve made of ceramics provided on a shaft, comprising: a cylindrical body made of ceramics and having a circular outer surface and a circular inner surface; and an elastic member molded on the inner surface of the cylindrical body, the elastic member being formed with an inner opening having a shape corresponding to the cross section of the shaft.

According to the present invention, when the shaft sleeve is incorporated in a bearing, the variation of the dimension between the bearing and the housing or between the shaft sleeve and the shaft due to temperature change is absorbed by the elastic member which is molded on the inner surface of the shaft sleeve and has an inner opening having a shape corresponding to the cross section of the shaft.

Further, the elastic member serves as shock absorbing material against the external force.

Furthermore, the elastic member serves as a driving force transmitting member, therefore the driving force is uniformly distributed on the entire inner surface of the ceramics, thus reducing the chance to cause the ceramic to be damaged or broken.

The above and other objects, features and advantages of the present invention will become more apparent from the following description when taken in conjunction with the accompanying drawings in which preferred embodiments of the present invention are shown by way of illustrative example.

### BRIEF DESCRIPTION OF THE DRAWINGS

In the drawings:
FIG. 1 is a side end view showing a shaft sleeve made of ceramics according to an embodiment of the present invention;
FIG. 2 is a cross-sectional view taken along a line II-II of FIG. 1;
FIG. 3 is a side end view showing a shaft sleeve made of ceramics according to another embodiment of the present invention;
FIG. 4 is a cross-sectional view showing a pump incorporating the shaft sleeve made of ceramics according to the present invention;
FIGS. 5(a) and 5(b) show a conventional shaft sleeve, FIG. 5 (a) is a cross-sectional view showing the conventional shaft sleeve and FIG. 5(b) is a side view showing the conventional shaft sleeve;
FIGS. 6(a) and 6(b) show a conventional engaging member, FIG. 6(a) is a front view showing the conventional engaging member and FIG. 6(b) is a cross-sectional view showing the conventional engaging member;
FIGS. 7(a), 7(b) and 7(c) show the engaging member which is used in conjunction with the spline shaft, FIG. 7(a) is a front view showing the engaging member, FIG. 7(b) is a side view showing the engaging member and FIG. 7(c) is an upper plan view showing the engaging member; and
FIG. 8 is a cross-sectional view showing the shaft sleeve which is applied to the spline shaft.

### DETAILED DESCRIPTION OF THE INVENTION

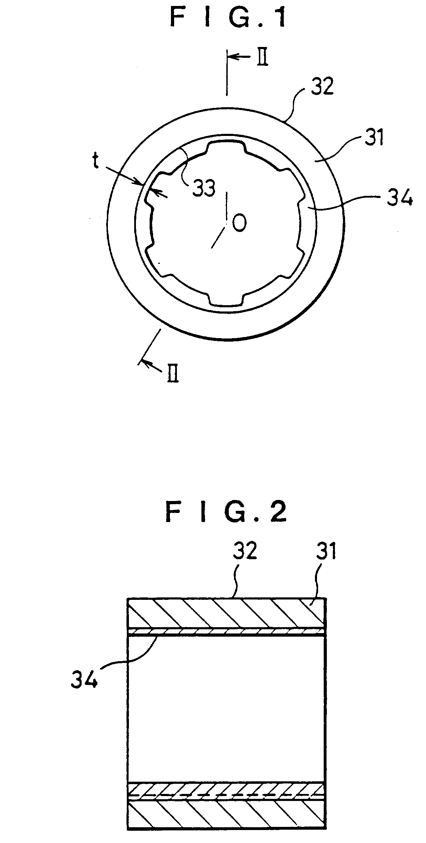

A shaft sleeve according to an embodiment of the present invention will be described below with reference to FIGS. 1 and 2.

As shown in FIGS. 1 and 2, a shaft sleeve 31 has a cylindrical shape and is provided, on the inside surface thereof, with an elastic member 34. The elastic member 34 is molded on the inner surface of the shaft sleeve 31 and has an inner opening having a shape corresponding to the cross section of the spline shaft (not shown). The shaft sleeve 31 has a circular outer surface 32 serving as a sliding surface and a circular inner surface 33 for carrying the elastic member 34. The sliding surface (the outer cylindrical surface 32) of the shaft sleeve 31 is finished by grinding or polishing so as to have a sufficient accuracy, but the inner cylindrical surface 33 is not finished and remains in a sintered condition.

Further, the elastic member 34 molded on the inner surface of the shaft sleeve 31 comprises elastic material such as rubber and has an inner opening having a shape corresponding to the cross section of the shaft, the shaft being inserted into the shaft sleeves. That is, the shaft sleeve 31 is tightly fitted with the shaft without clearance by the elastic member 34. The elastic member 34 is desirable to have a minimum thickness t in the range of 1 to 10 % of the inner diameter of the shaft sleeve 31 so that dimension variation caused by thermal expansion coefficient difference between the shaft sleeve 31 and the shaft may be absorbed.

With the above structure, when the shaft sleeve 31 is incorporated in the bearing, the dimension variation between the bearing and the housing, or between the shaft sleeve and shaft due to temperature change is absorbed by the elastic member 34 molded on the inner surface of the shaft sleeves 31. Further, the elastic member 34 serves as shock absorbing material against the external force which is applied to the bearing.

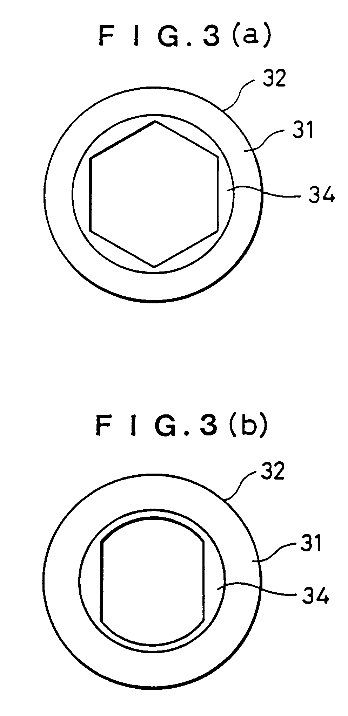

In the embodiment as shown FIGS. 1 and 2, the shaft sleeve 34 which is used in conjunction with the spline shaft is described. FIG. 3 is a side end view showing a shaft sleeve having an inner opening having another shape according to another embodiment of the present invention. FIG. 3(a) shows a sleeve shaft 31 made of ceramic which is applied to the shaft having a cross section of a polygon. The shape of the inner opening of the elastic member 34 is a hexagon which is the same shape as the cross section of the shaft. Further, FIG. 3(b) shows a sleeve shaft 31 which is applied to the shaft having two chamfering surfaces. That is, the elastic member 34 has an inner opening having a substantially oblong shape corresponding to the cross section of the shaft having two confronting round surfaces and two confronting straight surfaces.

The shaft sleeve in FIGS. 3(a) and 3(b) have the same function and effects as the shaft sleeve in FIGS. 1 and 2.

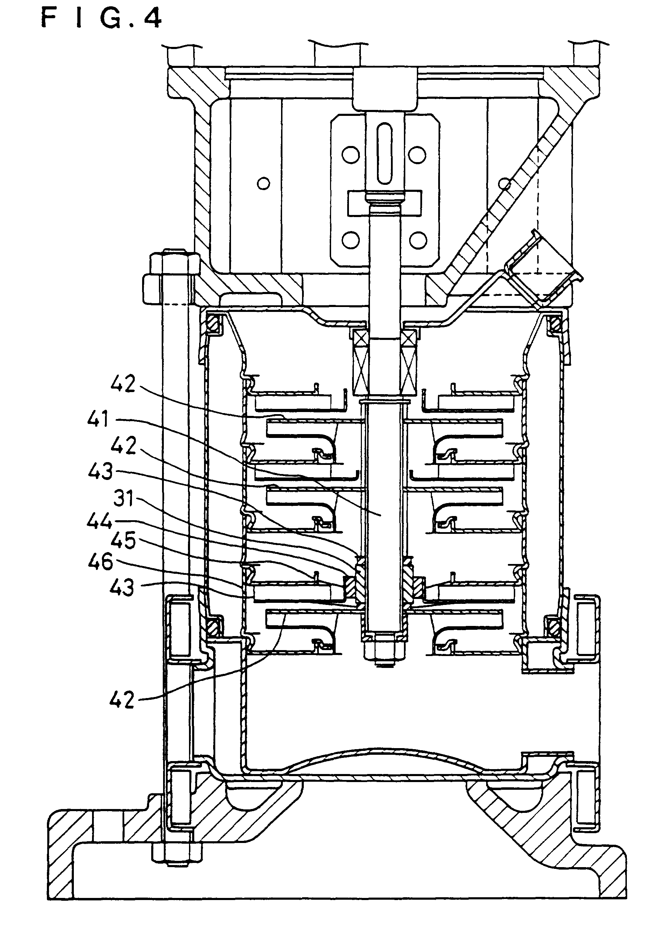

FIG. 4 shows an example in which the shaft sleeve made of ceramics according to the present invention is incorporated in a multistage centrifugal pump. The multistage centrifugal pump has a main shaft 41 on which a plurality of impellers 42 are provided. The main shaft 41 has one end portion which is provided with the shaft sleeve 31 according to the present invention. Washers 43, 43 are provided on the both sides of the shaft sleeve 31 so that the axial force applied to the shaft sleeve 31 is distributed. A bearing 44 is provided radially outwardly of the shaft sleeve 31. The bearing 44 is fixedly secured to a pump casing 46 through a bearing housing 45, thereby rotatably supporting the main shaft 41 and the shaft sleeve 31.

As is apparent from the foregoing description, the shaft sleeve according to the present invention offers the following advantages:

The elastic member molded on the inside surface of the shaft sleeve fills up dimension tolerance and a clearance which is provided to absorb the difference of thermal expansion coefficient between the shaft sleeve made of ceramics and the shaft made of metal. Therefore, the shaft is tightly fitted with the shaft sleeve. Further, the elastic member serves as shock absorbing material against an impact external force applied to the bearing. Furthermore, the elastic member serves as a driving force transmitting member and the driving force is uniformly distributed on the entire surface of the ceramics, thus reducing the chance to cause the ceramics to be damaged.

Further, since only the outer sliding surface of the shaft sleeve is subjected to the surface finishing and the inner surface of the sleeve shaft is not finished, the shaft sleeve can be reduced in production cost.

Particularly, in the case where the shaft sleeve of the present invention is used in conjunction with the spline shaft or the polygonal shaft, the inner surface of the ceramics is not required to conform to the cross section of the shaft. Therefore, a difficult working of the inner surface of the ceramics is eliminated, the ceramics is prevented from being cracked or damaged. Further, an engaging member is not required to prevent the shaft sleeve from rotating relative to the shaft. Furthermore, the shaft sleeve subjected to bending stress due to the external force or vibration is prevented from being damaged or broken.

Although certain preferred embodiments of the present invention have been shown and described in detail, it should be understood that various changes and modification may be made therein without departing from the scope of the appended claims.

## Claims

1. A shaft sleeve (31) made of ceramics for mounting about a shaft (41) for rotation therewith and for mounting inside an annular bearing (44) for relative rotation thereto, said shaft sleeve (31), comprising:
a cylindrical body made of ceramics and having a circular outer surface (32) and a circular inner surface (33); and
an elastic member (34) molded on said inner surface (33) of said cylindrical body, said elastic member (34) being formed with an inner opening having a shape corresponding to the cross section of said shaft (41).

2. The shaft sleeve (31) according to claim 1, wherein said elastic member (34) comprises rubber.

3. The shaft sleeve (31) according to claim 1, wherein said elastic member (34) has a certain thickness so that dimension variation caused by thermal expansion coefficient difference between said shaft sleeve (31) and said shaft (41) is absorbed.

4. The shaft sleeve (31) according to claim 1, wherein said elastic member (34) has a spline-shaped inner opening.

5. The shaft sleeve (31) according to claim 1, wherein said elastic member (34) has a polygonal inner opening.

6. The shaft sleeve (31) according to claim 1, wherein said elastic member (34) has a substantially oblong opening.

7. A centrifugal pump comprising:
a pump casing;
a shaft (41) rotatably provided in said pump casing body;
an impeller supported by said shaft; and
a shaft sleeve (31) for mounting about said shaft for rotation therewith and for mounting inside an annular bearing (44) for rotation thereto, the shaft sleeve (31) comprising:
a cylindrical body made of ceramics and having a circular outer surface (32) and a circular inner surface (33); and
an elastic member (34) molded on said inner surface (33) of said cylindrical body, said elastic member (34) being formed with an inner opening having a shape corresponding to the cross section of said shaft (41).--.

## Patentansprüche

1. Wellenhülse (31) aus Keramik zur Anbringung um eine Welle (41) zur Drehung damit und zur Anbringung innerhalb eines ringförmigen Lagers (44) zur Relativdrehung damit, wobei die Wellenhülse (31) folgendes aufweist:
einen zylindrischen Körper aus Keramik mit einer kreisförmigen Außenoberfläche (32) und einer kreisförmigen Innenoberfäche (33); und
ein Elastikglied (34), das an die Innenoberfläche (33) des zylindrischen Körpers angeformt ist, wobei das Elastikglied (34) mit einer Innenöffnung mit einer Form entsprechend dem Querschnitt der Welle (41) ausgebildet ist.

2. Wellenhülse (31) nach Anspruch 1, wobei das Elastikglied (34) Gummi aufweist.

3. Wellenhülse (31) nach Anspruch 1, wobei das Elastikglied (34) eine bestimmte Dicke besitzt, so daß eine Abmessungsvariation, die durch Unterschiede der Wärmeausdehnungskoeffizienten zwischen der Wellenhülse (31) und der Welle (41) bewirkt wird, absorbiert wird.

4. Wellenhülse (31) nach Anspruch 1, wobei das Elastikglied (34) eine keilnutförmige Innenöffnung aufweist.

5. Wellenhülse (31) nach Anspruch 1, wobei das Elastikglied (34) eine polygonale Innenöffnung aufweist.

6. Wellenhülse (31) nach Anspruch 1, wobei das Elastikglied (34) eine im wesentlichen längliche Öffnung aufweist.

7. Zentrifugalpumpe, die folgendes aufweist:
ein Pumpengehäuse;
eine Welle (41), drehbar vorgesehen in dem Pumpengehäusekörper;
ein Laufrad getragen durch die Welle; und
eine Wellenhülse (31) zur Anbringung um die Welle, zur Drehung damit und zur Anbringung innerhalb eines ringförmigen Lagers (44) zur Drehung relativ dazu, wobei die Wellenhülse (31) folgendes aufweist:
einen zylindrischen Körper aus Keramik mit einer kreisförmigen Außenoberfläche (32) und einer kreisförmigen Innenoberfläche (33); und
ein Elastikglied (34), das an die Innenoberfläche (33) des zylindrischen Körpers angeformt ist, wobei das Elastikglied (34) mit einer Innenöffnung mit einer Form entsprechend dem Querschnitt der Welle (41) ausgebildet ist.

## Revendications

1. Bague d'arbre (31) en céramique destinée à être montée autour d'un arbre (41) pour tourner avec celui-ci et à être montée à l'intérieur d'un palier annulaire (44) pour tourner par rapport à celui-ci, ladite bague d'arbre (31) comprenant :
un corps cylindrique en céramique ayant une surface extérieure circulaire (32) et une surface intérieure circulaire (33) ; et
un élément élastique (34) moulé sur ladite surface intérieure (33) dudit corps cylindrique, ledit élément élastique (34) étant constitué d'une ouverture intérieure dont la forme correspond à la section transverse dudit arbre (41).

2. Bague d'arbre (31) selon la revendication 1, dans laquelle ledit élément élastique (34) comprend du caoutchouc.

3. Bague d'arbre (31) selon la revendication 1, dans laquelle ledit élément élastique (34) a une certaine épaisseur de façon à ce que les variations de dimensions causées par la différence de coefficient de dilatation thermique entre ladite bague d'arbre (31) et ledit arbre (41) soient absorbées.

4. Bague d'arbre (31) selon la revendication 1, dans laquelle ledit élément élastique (34) a une ouverture intérieure de forme cannelée.

5. Bague d'arbre (31) selon la revendication 1, dans laquelle ledit élément élastique (34) a une ouverture intérieure de forme polygonale.

6. Bague d'arbre (31) selon la revendication 1, dans laquelle ledit élément élastique (34) a une ouverture sensiblement allongée.

7. Pompe centrifuge comprenant :
un carter de pompe ;
un arbre (41) disposé de façon à pouvoir tourner dans ledit corps du carter de pompe ;
un rotor supporté par ledit arbre ; et
une bague d'arbre (31) destinée à être montée autour dudit arbre pour tourner avec celui-ci et à être montée à l'intérieur d'un palier annulaire (44) pour tourner par rapport à celui-ci, ladite bague d'arbre (31) comprenant :
un corps cylindrique en céramique ayant une surface extérieure circulaire (32) et une surface intérieure circulaire (33) ; et
un élément élastique (34) moulé sur ladite surface intérieure (33) dudit corps cylindrique, ledit élément élastique (34) étant constitué d'une ouverture intérieure dont la forme correspond à la section transverse dudit arbre (41).
